# EUROPÄISCHE PATENTSCHRIFT

(11) **EP 1 775 182 B1**
(45) Veröffentlichungstag und Bekanntmachung des Hinweises auf die Patenterteilung: **10.02.2010**
(21) Anmeldenummer: 06121163.7
(22) Anmeldetag: 25.09.2006
(51) Int. Cl.: B60R 21/34, G01P 21/00, G01P 15/00

(54) **Verfahren und Vorrichtung zur Detektion eines Fußgängeraufpralls**
Method and device for detecting pedestrian impact
Procédé et dispositif pour la détection de choc piétons

(30) Priorität: 12.10.2005 DE 102005048790
(43) Veröffentlichungstag der Anmeldung: 18.04.2007
(73) Patentinhaber: ROBERT BOSCH GMBH, 70442 Stuttgart (DE)
(72) Erfinder: Kocher, Pascal, 70839, Gerlingen (DE); Mack, Frank, 140-894, Hillsrode Village Unit E-402 (KR); Steinkogler, Sascha, 79106, Freiburg (DE); Wacker, Manuel, 75378, Bad Liebenzell (DE)

(56) Entgegenhaltungen:
- DE-A1- 3 920 091
- DE-A1- 4 302 399

## Beschreibung

### Stand der Technik

Die Erfindung betrifft eine Vorrichtung bzw. ein Verfahren zur Detektion eines Fußgängeraufpralls nach der Gattung der unabhängigen Patentansprüche.

Aus DE 10332702 A1 ist es bereits bekannt, als Aufprallsensoren für die Erkennung eines Fußgängeraufpralls Beschleunigungssensoren zu verwenden.

### Offenbarung der Erfindung

Das erfindungsgemäße Verfahren zur Detektion eines Fußgängeraufpralls bzw. die erfindungsgemäße Vorrichtung zur Detektion eines Fußgängeraufpralls haben dem gegenüber den Vorteil, dass die Funktionsfähigkeit der verwendeten Beschleunigungssensorik zur Erkennung eines Fußgängeraufpralls durch Vergleich mit Beschleunigungssignalen von unterschiedlichen Beschleunigungssensoriken erreicht wird. Dabei ist es möglich, dass die Beschleunigungssensoriken beide zur Detektion eines Fußgängeraufpralls konfiguriert sind oder dass nur eine davon zur Detektion eines Fußgängeraufpralls verwendet wird und die andere als UpFront-Sensorik oder Seitenaufprallsensorik oder Zentralsensorik verwendet wird. Diese andere Beschleunigungssensorik ist dann nicht hinter der Stoßfängerverkleidung angeordnet, sondern auf einem stabileren Träger. Dadurch ist eine kostengünstige Diagnosemöglichkeit für die Fußgängerschutzsensorik gegeben. Insbesondere lose Sensoren können mit dem erfindungsgemäßen Verfahren bzw. der erfindungsgemäßen Vorrichtung gut erkannt werden.

Aus DE 39 20 091 A1 ist es bekannt, bei einer Sicherheitseinrichtung für Fahrzeuginsassen die Signale von zwei beschleunigungsempfindlichen Sensoren für die Prüfung der Funktionsfähigkeit dieser Sensoren miteinander zu vergleichen. Dabei werden die Signale während eines vorgebbaren Zeitintervalls summiert bzw. integriert und die Summen bzw. Integralwerte nach Ablauf des vorgebbaren Zeitintervalls miteinander verglichen. Bei Überschreiten eines vorgebbaren Grenzwerts durch den Vergleichswert wird eine Warneinrichtung in Funktion gesetzt. Aus DE 43 02 399 A1 ist es bekannt, die Äusgangssignale von zwei identischen Beschleunigungsanordnungen miteinander zu vergleichen. Dieser Vergleich erfolgt dadurch, dass Integralwerte der Sensorausgangssignale gebildet werden, wobei diese Integralwerte mit Korrekturwerten verknüpft werden. Die derart integrierten Integralwerte werden anschließend einer Differenzbildung unterzogen, um den Differenzwert D zu erhalten. Dieser Differenzwert D wird mit einem vorgebbaren Schwellwert F verglichen. In Abhängigkeit von diesem Schwellwertvergleich wird eine Fehlermeldung veranlasst und gegebenenfalls darauf hingewiesen, dass die Sensoranordnungen fehlerhaft sind.

Wird eine symmetrische Beschleunigungssensorik verwendet, d. h. ein Beschleunigungssensor ist links und der andere rechts von der Mitte des Fahrzeugs an der Stoßfängerverkleidung, ist es erfindungsgemäß vorgesehen, einen Vergleich des linken und rechten Sensorsignals während eines Normalbetriebs auf Schlechtwegstrecken durchzuführen. Insbesondere auf Schlechtwegstrecken wird ein loser Sensor sich sehr stark bewegen und damit zu einem oszillierenden Signal führen. Sind jedoch beide Sensoren ordnungsgemäß befestigt, dann werden die Signale innerhalb eines vorgegebenen Messfensters in Form und Ausmaß symmetrisch bzw. ähnlich zueinander sein. Sobald jedoch einer der beiden Sensoren lose ist oder eine asymmetrische Beschädigung des Stoßfängers vorliegt, werden diese Schlechtwegstreckensignale ebenfalls eine Asymmetrie aufweisen. Diese Asymmetrie kann zur Diagnose des Fußgängerschutzsystems verwendet werden, um eine eventuelle Reduktion der Fußgängerfunktionalität aufgrund loser Sensoren, Alterungserscheinungen oder Beschädigungen des Frontends hervorgerufen wurden. In Abhängigkeit von der Funktionsfähigkeit der Beschleunigungssensorik wird eine Anzeige, vorzugsweise eine Warnlampe, angesteuert, oder es können auch Algorithmusparameter angepasst werden.

Der Kern des erfindungsgemäßen Verfahrens ist darin zu sehen, dass die zu vergleichenden Signale hinsichtlich ihres Amplitudengangs und des zeitlichen Verlaufs des Amplitudengangs verglichen werden. Damit wird die Erkenntnis ausgenutzt, dass lose Sensoren bei einer Schlechtwegstrecke weit höhere Amplituden als ordnungsgemäß befestigte Sensoren erzeugen und auch der zeitliche Verlauf ein anderer ist, denn die Frequenz des Signals des losen Sensors ist erheblich höher.

Durch die in den abhängigen Ansprüchen aufgeführten Maßnahmen und Weiterbildungen sind vorteilhafte Verbesserungen der in den unabhängigen Patentansprüchen angegebene Vorrichtung bzw. Verfahren zur Detektion eines Fußgängeraufpralls möglich.

Besonders vorteilhaft ist, dass die Funktionsfähigkeit der Beschleunigungssensorik nur geprüft wird, wenn das Signal der Beschleunigungssensorik eine Schwelle überschreitet, die höher als die Rauschschwelle ist. Diese Schwelle ist höher als die Rauschschwelle, da diese Schwelle das mechanische Klappern eines Beschleunigungssensorik, der lose ist, erfassen soll und dafür sind höhere Auslenkungen des Beschleunigungssignals notwendig. Es liegt damit ein mechanischer Rauschschwellenwert vor. In Abhängigkeit von der Überschreitung dieser Schwelle wird der Detektionsalgorithmus, also das erfindungsgemäße Verfahren aktiviert.

Die erste Beschleunigungssensorik, die hier vorteilhafter Weise geprüft wird, ist hinter der Stoßfängerverkleidung angeordnet, da dies ein geeigneter Ort ist, um einen Fußgängeraufprall zu detektieren. Die zweite Beschleunigungssensorik, dessen Signal zum Vergleich herangezogen wird, kann als Fußgängeraufprallsensorik ebenfalls hinter der Stoßfängerverkleidung angeordnet sein, es ist jedoch auch möglich, dass diese auch als UpFront-Sensorik, periphere Sensorik oder als Zentralsensorik ausgebildet ist. Die UpFront-Sensorik ist meist am Kühlergrill angeordnet, also an einem Ort, der einen stabileren Untergrund bietet als für die Fußgängerschutzsensorik hinter der Stoßfängerverkleidung. Auch die periphere Sensorik oder die Zentralsensorik sind an geschützteren Orten angeordnet. Bei der Beschleunigungssensorik handelt es sich um einen oder mehrere Beschleunigungssensoren, die in eine oder mehrere Raumrichtungen orientiert sind. Die Beschleunigungssensoren selbst sind als mikromechanische Sensoren ausgebildet und messen kapazitiv die auftretende Verzögerung bzw. Beschleunigung.

Weiterhin ist es vorteilhaft, dass das Ansteuersignal, das in Abhängigkeit von dem Vergleich, eine Anzeige oder ein Fußgängerschutzalgorithmus angesteuert werden. Mit der Anzeige, beispielsweise einer Warnlampe oder einem Display auf einem Navigationsgerät oder einem Bordcomputer kann der Mangel des losen Sensors direkt angezeigt werden, sodass ein Werkstattbesuch veranlasst wird. Aber auch die Einflussnahme auf einen Fußgängerschutzalgorithmus ist hier möglich. Weist der Vergleich auf einen losen Beschleunigungssensor hin, dann wird das Signal dieses vermeintlich losen Beschleunigungssensors entsprechend bewertet.

Erfindungsgemäß werden verschiedene Vorschläge beschrieben, mit denen das erfindungsgemäße Verfahren bzw. die erfindungsgemäße Vorrichtung verwirklicht werden können. Dazu zählt, dass die Überschreitung durch das Signal der Beschleunigungssensorik des Schwellwerts geprüft wird. Insbesondere wird dabei in einem Zeitfenster gezählt, wie oft das Signal der Beschleunigungssensoren den Schwellwert übertrifft. Dies kann der mechanische Schwellwert sein. Dieser Vergleich wird ausgelöst durch eine erste Überschreitung des Schwellwerts.

Eine vorteilhafte Alternative ist es, dass die beiden Signale, die miteinander verglichen werden, als integrierte oder aufsummierte Beschleunigungssignale miteinander verglichen werden. Der so entstehende Differenzwert wird dann mit einem vorgegebenen Schwellwert verglichen, dessen Überschreitung dann anzeigt, ob der zu prüfende Sensor lose ist. Eine weitere Alternative ist es, das erste und das zweite Signal hinsichtlich ihrer Absolutbeträge zu vergleichen. Auch eine Filterung eines bestimmten Frequenzspektrums und eine danach durchgeführte Vergleichsoperation ermöglicht eine genaue Aussage, ob einer der zu prüfenden Beschleunigungssensoren lose ist.

Vorteilhafterweise kann zusätzlich die Fahrzeuggeschwindigkeit berücksichtigt werden, indem die Schwellen- oder Zeitintervalle dieser beiden Kriterien, also des Amplitudengangs und des zeitlichen Verlaufs des Amplitudengangs wahlweise an die Fahrzeuggeschwindigkeit angepasst werden. Nur wenn beide Kriterien erfüllt sind, wird auf einen losen Sensor geschlossen.

### Zeichnung

Ausführungsbeispiele der Erfindung sind in der Zeichnung dargestellt und werden in der nachfolgenden Beschreibung näher erläutert.

Es zeigen:
- Figur 1: ein Blockschaltbild der erfindungsgemäßen Vorrichtung,
- Figur 2: ein erstes Beschleunigungszeitdiagramm,
- Figur 3: ein zweites Beschleunigungszeitdiagramm,
- Figur 4: ein Flussdiagramm,
- Figur 5: ein drittes Beschleunigungszeitdiagramm,
- Figur 6: ein weiteres Flussdiagramm,
- Figur 7: ein weiteres Flussdiagramm,
- Figur 8: ein Blockschaltbild und
- Figur 9: ein viertes Beschleunigungszeitdiagramm.

### Beschreibung

Im Laufe der Lebensdauer eines Fahrzeugs muss damit gerechnet werden, dass bestimmte Befestigungen lose werden, Materialien ermüden oder kleine unbemerkte Beschädigungen auftreten können. Das gilt auch für den Stoßfänger und in den Stoßfänger integrierte Beschleunigungssensoren für den aktiven Fußgängerschutz.

Vorgeschlagen wird daher, einen solchen losen Sensor dadurch zu erkennen, indem das Signal eines Beschleunigungssensors mit einem weiteren Signal eines weiteren Beschleunigungssensors verglichen wird. Die Differenz, die sich aus dem Vergleich ergibt, wird mit einem vorgegebenen Schwellwert verglichen, sodass ein Überschreiten des Schwellwerts anzeigt, dass der Sensor lose ist.

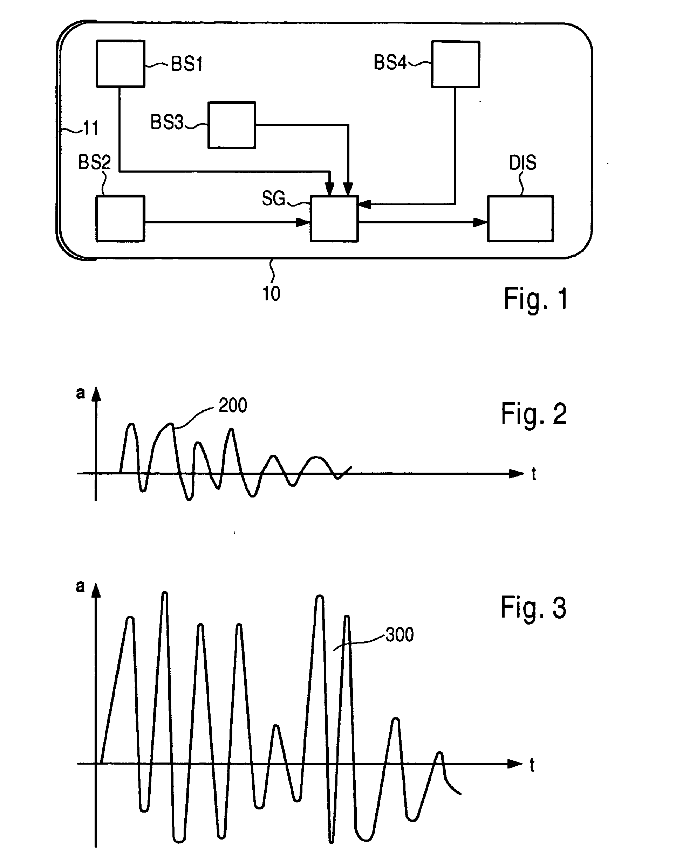

Figur 1 erläutert in einem Blockschaltbild die erfindungsgemäße Vorrichtung. In einem Fahrzeug 10 befinden sich hinter der Stoßfängerverkleidung 11 symmetrisch zur Mitte zwei Beschleunigungssensoren BS1 und BS2. Diese Sensoren BS1 und BS2 sind so weit vorne angeordnet, um einen Fußgängeraufprall zu detektieren. Die Beschleunigungssensoren BS1 und BS2 sind an ein Steuergerät SG über eine Zweidrahtleitung angeschlossen. Über diese Leitung übertragen die Sensoren BS1 und BS2 ihre Messdaten an das Steuergerät SG. Zusätzlich ist hier noch ein UpFront-Sensor BS3 dargestellt, der ebenfalls an das Steuergerät SG angekoppelt ist. Auch ein zentral angeordneter Sensor BS4 ist an das Steuergerät SG angeschlossen. Der Einfachheit halber sind hier Seitenaufprallsensoren nicht dargestellt, doch auch sie können an das Steuergerät SG angeschlossen sein. Dabei ist auch eine Busverbindung möglich. Über einen Ausgang ist das Steuergerät SG an eine Anzeige DIS angeschlossen, wobei das Steuergerät SG in Abhängigkeit von der Auswertung der Sensorsignale nach dem erfindungsgemäßen Verfahren die Anzeige DIS ansteuert und auch den Auslöseralgorithmus für die Fußgängerschutzsysteme, der sich im Steuergerät selbst befindet. Die Beeinflussung des Fußgängerschutzalgorithmus kann in dem Verändern von Schwellwerten, von Rauschschwellen und von Zeitfenstern bestehen. Vorliegend soll geprüft werden, ob einer der Sensoren BS1 oder BS2 lose ist. D. h. dass seine Befestigung nicht mehr ordnungsgemäß ist. Dies wird erfindungsgemäß dadurch geprüft, dass die Signale der Sensoren BS1 und BS2 miteinander verglichen werden. Es ist jedoch auch möglich, die Signale der Sensoren BS1 und BS2 jeweils mit einem Signal der Sensoren BS3 und BS4 oder einem Seitenaufprallsensor zu vergleichen. Das Verfahren zur Prüfung wird gestartet, wenn die Beschleunigungssignale eine mechanische Rauschschwelle überschreiten. Diese Rauschschwelle liegt über der elektronischen Rauschschwelle von 2 - 3g, also beispielsweise bei 5g. Dann kann mit einem der nachfolgend beschriebenen Verfahren der Vergleich durchgeführt werden und entschieden werden, ob einer der Sensoren lose ist, sodass das Signal dieses Sensors im Fußgängerschutzalgorithmus nicht mehr mit hoher Bedeutung ausgewertet wird und dem Fahrer angezeigt wird, beispielsweise bei einer Wamlampe oder einer Anzeige eines Bordcomputers oder eines Navigationsgerät, dass ein Werkstattbesuch von Nöten ist.

In Figur 2 ist ein Beschleunigungszeitdiagramm dargestellt. Durch die Kurve 200, die oszillierend ist, wird ein Signal eines der Sensoren BS1 oder BS2 dargestellt auf einer Schlechtwegstrecke. Der Sensor ist dabei ordnungsgemäß montiert.

Figur 3 zeigt dagegen ein Signal bei der gleichen Schlechtwegstrecke eines losen Sensors. Die Kurve 300 zeigt im Vergleich zur Kurve 200 deutlich höhere Amplituden, die bis zu 10G erreichen können und auch eine höhere Frequenz. Damit ist klar, dass aus einem Vergleich der beiden Signale oder davon abgeleiteter Signale festgestellt werden kann, ob einer der Sensoren lose ist.

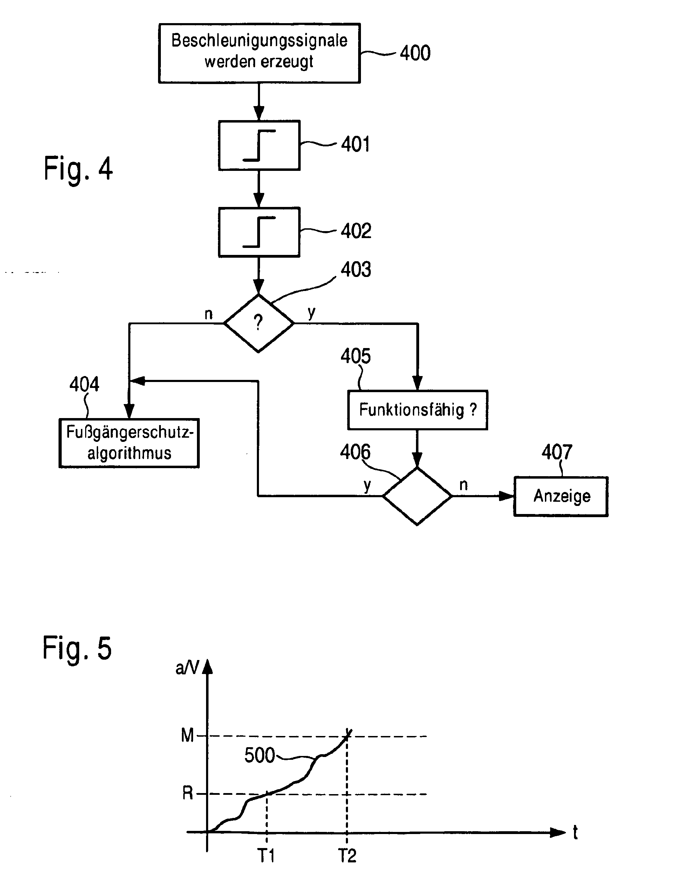

Figur 4 erläutert in einem Flussdiagramm das erfindungsgemäße Verfahren. In Verfahrensschritt 400 werden die Beschleunigungssignale durch die Sensoren BS1, BS2, BS3 und BS4 erzeugt. In Verfahrensschritt 401 wird geprüft, ob die Beschleunigungssignale über der elektronischen Rauschschwelle liegen. Ist das der Fall, so wird in Verfahrensschritt 402 geprüft, ob die Signale auch über der mechanischen Rauschschwelle liegen. In Verfahrensschritt 403 wird dann in Abhängigkeit davon entschieden, was weiter passiert. In Verfahrensschritt 403 wird entschieden, dass, wenn die mechanische Rauschschwelle nicht überschritten wurde, zum Fußgängerschutzalgorithmus 404 gesprungen wird. Wurde jedoch die mechanische Rauschschwelle überschritten, dann wird zunächst geprüft, und zwar in Verfahrensschritt 405, ob die Funktionsfähigkeit des Beschleunigungssensors gegeben ist. Dies wird in Verfahrensschritt 406 durch ein Vergleich der beiden Signale, wie oben beschrieben und unten weiter ausgeführt, durchgeführt. Zeigt sich in Verfahrensschritt 406, dass die Abweichung zwischen den Signale so groß ist, dass von einem losen Sensor ausgegangen werden muss, dann wird in Verfahrensschritt 407 dies angezeigt und der Fußgängerschutzalgorithmus entsprechend konfiguriert. Sind die Signale jedoch nicht so weit auseinander, dass von einem losen Sensor ausgegangen werden muss, dann wird von Verfahrensschritt 406 auch zu Verfahrensschritt 404 gesprungen und der Fußgängerschutzalgorithmus kann ausgewertet werden.

Figur 5 zeigt in einem weiteren Beschleunigungszeitdiagramm bzw. Geschwindigkeitszeitdiagramm, wie die einzelnen Schwellen überschritten werden, was für das Verständnis der nachfolgenden Flussdiagramme notwendig ist. Die Kurve 500 kann einerseits ein Beschleunigungssignal, andererseits ein integriertes Beschleunigungssignal, also ein Geschwindigkeitssignal sein. Zum Zeitpunkt T1 wird die elektronische Rauschschwelle R überschritten. Zu diesem Zeitpunkt kann also der Fußgängerschutzalgorithmus gestartet werden. Zum Zeitpunkt T2 wird jedoch festgestellt, dass die Kurve 500 auch die mechanische Rauschschwelle M überschreitet, sodass eine Überprüfung nach dem erfindungsgemäßen Verfahren der Beschleunigungssensorik notwendig ist.

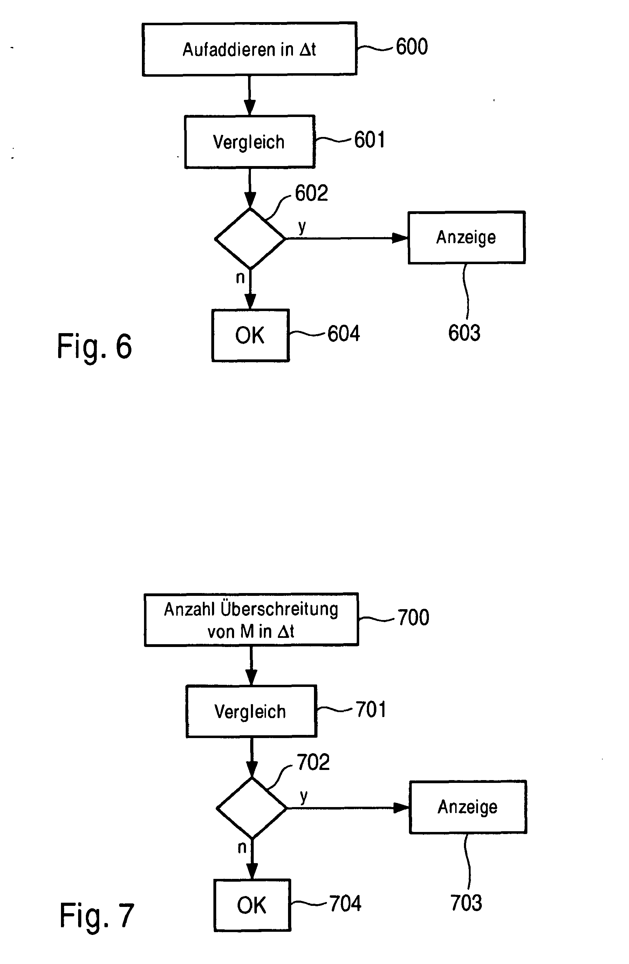

Figur 6 zeigt ein erstes Ausführungsbeispiel des erfindungsgemäßen Verfahrens. In Verfahrensschritt 600 wird in einem Zeitintervall ΔT, das nach T2 beginnt das Signal des zu prüfenden Beschleunigungssensors und des Vergleichssensors aufaddiert. In Verfahrensschritt 601 werden die Signale dann miteinander verglichen und der Differenzbetrag wird in Verfahrensschritt 602 mit einem Schwellwert verglichen. Wird der Schwellwert übertroffen, dann erfolgt in Verfahrensschritt 603 eine Anzeige. Auch eine Beeinflussung des Fußgängerschutzalgorithmus erfolgt hier. Wurde dieser Schwellwert nicht übertroffen, dann ist davon auszugehen, und zwar in Verfahrensschritt 604, dass die Beschleunigungssensorik in Ordnung ist.

Figur 7 zeigt ein weiteres Ausführungsbeispiel des erfindungsgemäßen Verfahrens. In Verfahrensschritt 700 wird nach dem Überschreiten des mechanischen Schwellwerts M gezählt, wie oft die beiden Signale, also das zu prüfende Signal und das Vergleichssignal, den Schwellwert im Zeitfenster ΔT übertreffen. Diese Anzahl wird dann in Verfahrensschritt 701 miteinander verglichen und die Differenz in Verfahrensschritt 702 mit einem Schwellwert verglichen, dessen Überschreiten wieder dazu führt, dass dies in Verfahrensschritt 703 angezeigt wird. Wird dieser Schwellwert nicht überschritten, wird in Verfahrensschritt 704 erkannt, dass die Beschleunigungssensorik ordnungsgemäß angeschlossen ist.

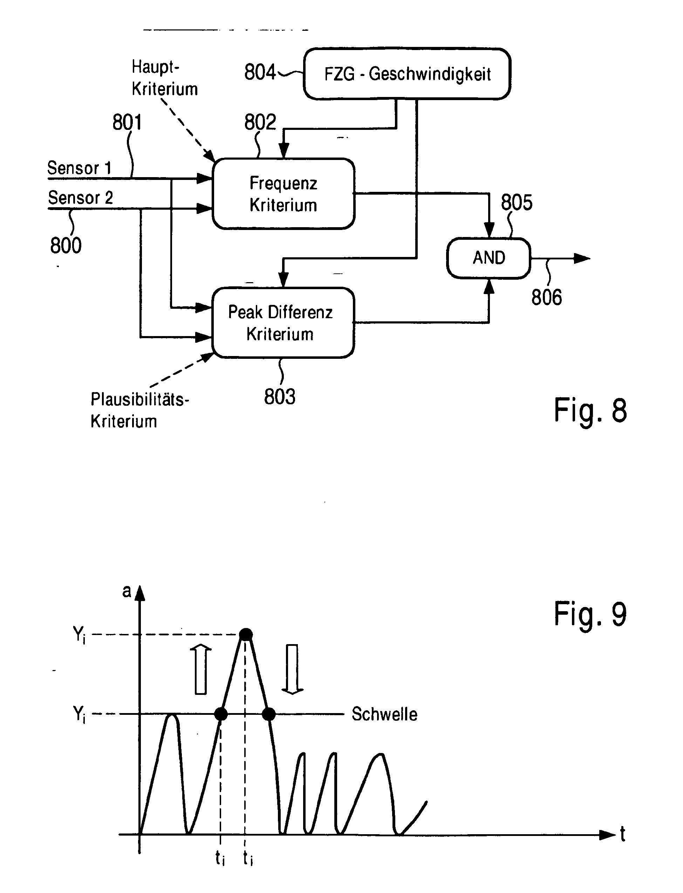

Figur 8 zeigt ein weiteres Ausführungsbeispiel des erfindungsgemäßen Verfahrens. Die Sensorsignal 800 und 801 der beiden Sensoren werden hier im Prozessor zweier Kriterien parallel unterzogen, zum einen dem Frequenzkriterium 802 und zum anderen dem Peak-Differenzkriterium 803. Das Frequenzkriterium 802 oder auch der zeitliche Verlauf des Amplitudengangs berücksichtigt den zeitlichen Verlauf des Amplitudengangs. Dieses Kriterium beruht auf der Beobachtung, dass ein loser Sensor, der mit einer festen Oberfläche kollidiert, ein schnell oszillierendes, also hochfrequentes und quantitativ ausgeprägtes Signal liefert. Dieses Kriterium ist dazu geeignet, die Signale in eine mathematische Größe umzuwandeln, die eine robuste Entscheidung, ob nun einer der beteiligten Sensoren ist, möglich macht. Das Verfahren beruht auf dem Vorzeichenwechsel, der Differenz des aktuellen Sensorsignalwerts mit dem unmittelbar vorherigen. Dabei wird, sobald wiederum eine bestimmte Rauschschwelle, die unabhängig vom Peak-Differenzkriterium 803 gewählt werden kann, überschritten wird, zunächst die Differenz der Absolutbeträge zweier aufeinander folgender Messwerte, beispielsweise *Y_{I}* und *Y*_{*I*-1} gebildet. Entscheidend dabei ist das Vorzeichen dieser Differenz. Die entscheidende Größe zur Diagnose ist nun die Anzahl der stattfindenden Vorzeichenwechsel dieser Differenz innerhalb eines bestimmten Zeitintervalls, das im Sekundenbereich liegen kann. Diese Größe ist nun ein Maß dafür, wo oft ein loser Sensor klappert. Der Quotient aus der Anzahl der stattfindenden Vorzeichenwechsel der beiden Sensoren, wobei wiederum angenommen wird, dass einer der beiden Sensoren als Referenz gelten kann, ist nun die Größe, die mit einer empirischen Schwelle verglichen wird und somit das Entscheidungskriterium zur Diagnose darstellt. Das Peak-Differenzkriterium berücksichtigt folgendes: es wird von mindestens zwei Sensoren oberhalb einer sensorintrinsischen Rauschschwelle die Amplitude innerhalb eines bestimmten Zeitintervalls aufaddiert. Die Summation beginnt dabei, sobald einer der beteiligten Sensoren die Rauschschwelle überschreitet. Das Zeitintervall wird dabei so gewählt, dass ein typischer Schlechtwegstreckenvorfall, ein Schlagloch, eine kleine Schwelle, ein Bordstein von den beteiligten Sensoren möglichst vollständig aufgezeichnet wird. So ein Vorfall dauert ca. 300 ms. weshalb ein Zeitfenster von ca. 500 ms. angemessen ist. Die errechnete Größe, die eine Diagnose bewirken kann, wird aus der Differenz der einzelnen Summen der Sensorsignalen nach besagtem Zeitintervall bestimmt. Die Fehlererkennung erfolgt mit dem Vergleich dieser Größe mit einer empirisch bestimmten Schwelle.

Die Schwellen oder Zeitintervalle der beiden Kriterien können wahlweise an die Fahrzeuggeschwindigkeit 804 angepasst werden. Die Entscheidung, ob nun eine beschädigte Sensorbefestigung bzw. -umgebung vorliegt, wird mittels einer Unverknüpfung (805) beider oben vorgestellter Kriterien bewerkstelligt, sodass dann das Signal 806 vorliegt, das anzeigt, ob ein Sensor lose ist.

Figur 9 zeigt ein weiteres Beschleunigungszeitdiagramm, um die Funktion des zuletzt beschriebenen Verfahrens näher zu erläutern. Hier wird das Frequenzkriterium beschrieben. In einem bestimmten Zeitintervall, das im Sekundenbereich liegt, wird zu jedem diskreten Zeitpunkt das Vorzeichen der Flankensteigung berechnet. Dies ist durch die dicken Punkte angezeigt. Wenn von einem Zeitabschnitt *t_{I}* nach *t*_{*I*+1} ein Vorzeichenwechsel auftritt, wird ein Zähler inkrementiert. Y bedeutet hier das Signal des Sensors, also die Amplitude zum Zeitpunkt *t_{I}.* Dabei wird der Absolut betrag von *Y_{I}* minus der Absolutbetrag von *Y*_{*I*-1} und das Vorzeichen dieser Größe bestimmt.

Durch den Vergleich der Zählerstände zweier Sensoren durch die Bildung der Quotienten ergibt sich eine relative Abweichung der Sensorsignale, die für eine Entscheidung für die Diagnose verwendet werden kann.

## Patentansprüche

1. Verfahren zur Detektion eines Fußgängeraufpralls mit folgenden Verfahrensschritten:
- Detektion eines Fußgängeraufpralls anhand zumindest eines ersten Signals einer ersten Beschleunigungssensorik (BS1)
- Feststellung der Funktionsfähigkeit der ersten und/oder einer zweiten Beschleunigungssensorik (BS1-BS4) anhand eines Vergleichs des ersten Signals und eines zweiten Signals der Beschleunigungssensorik (BS2-BS4)
- Erzeugung eines Ansteuersignals in Abhängigkeit von der Feststellung, indem das erste und das zweite Signal zwei Kriterien parallel untergezogen werden : zum einen einem Frequenzkriterium und zum anderen einem Peak-Differenzkriterium, indem
bei dem Frequenzkriterium eine jeweilige Anzahl von Vorzeichenwechseln einer ersten Differenz von Absolutbeträgen von unmittelbar aufeinanderfolgenden und oberhalb eine Rauschschwelle liegenden Messwerten des ersten und des zweiten Signals jeweils innerhalb eines bestimmten ersten Zeitintervalls verwendet wird, wobei ein Quotient aus der Anzahl der stattfindenden Vorzeichenwechsel der beiden Sensoren eine Grösse ist, die mit einer ersten empirischen Schwelle verglichen wird, um ein Entscheidungskriterium zur Diagnose darzustellen und indem, bei dem Peak-Differenzkriterium, die oberhalb einer Rauschschwelle befindenden Amplitude des ersten und des zweiten Signals innerhalb eines zweiten Zeitintervalls jeweils zu einer ersten und zweiten Summe aufaddiert werden, und eine zweite Differenz aus der ersten und zweiten Summe nach dem zweiten Zeitintervall bestimmt wird und die zweite Differenz zur Fehlererkennung mit einer zweiten empirisch bestimmten Schwelle verglichen wird.

2. Verfahren nach Anspruch 1, **dadurch gekennzeichnet, dass** die Feststellung in Abhängigkeit vom Überschreiten eines Schwellwerts (M) durch das erste Signal durchgeführt wird, wobei der Schwellwert (M) über der Rauschschwelle (R) liegt.

3. Verfahren nach Anspruch 2, **dadurch gekennzeichnet, dass** die Feststellung derart durchgeführt wird, dass ein Vergleich der Überschreitungen des Schwellwerts (M) in einem ersten Zeitfenster (ΔT) durch das erste und zweite Signal vorgenommen wird.

4. Verfahren nach Anspruch 1 oder 2, **dadurch gekennzeichnet, dass** die Feststellung derart durchgeführt wird, dass das erste und das zweite Signal jeweils als integriertes oder aufnummeriertes Beschleunigungssignal miteinander verglichen werden.

5. Verfahren nach Anspruch 1 oder 2, **dadurch gekennzeichnet, dass** die Feststellung derart durchgeführt ist, dass das erste und das zweite Signal hinsichtlich ihrer Absolutbeträge verglichen werden.

6. Verfahren nach Anspruch 1 oder 2, **dadurch gekennzeichnet, dass** die Feststellung derart durchgeführt wird, dass das erste und das zweite Signal gefiltert und die gefilterten Signale miteinander verglichen werden.

7. Verfahren nach Anspruch 1, **dadurch gekennzeichnet, dass** zusätzlich die Fahrzeuggeschwindigkeit berücksichtigt wird.

## Claims

1. Method for detecting a pedestrian impact, having the following method steps:
- a pedestrian impact is detected using at least one first signal from a first acceleration sensor system (BS1),
- the functionality of the first acceleration sensor system and/or a second acceleration sensor system (BS1-BS4) is determined by comparing the first signal and a second signal from the acceleration sensor system (BS2-BS4),
- a drive signal is generated on the basis of the determination by subjecting the first and second signals to two criteria in a parallel manner: a frequency criterion, on the one hand, and a peak differential criterion, on the other hand, by
respectively using a respective number of sign changes of a first difference between absolute magnitudes of immediately successive measured values of the first and second signals, which measured values are above a noise threshold, within a particular first interval of time in the case of the frequency criterion, a quotient of the number of sign changes of the two sensors being a variable which is compared with a first empirical threshold in order to represent a decision criterion for diagnosis, and by respectively adding those amplitudes of the first and second signals which are above a noise threshold to a first and a second sum within a second interval of time in the case of the peak differential criterion, and determining a second difference from the first and second sums after the second interval of time, and comparing the second difference with a second empirically determined threshold in order to detect errors.

2. Method according to Claim 1, **characterized in that** the determination is carried out on the basis of a threshold value (M) being exceeded by the first signal, the threshold value (M) being above the noise threshold (R).

3. Method according to Claim 2, **characterized in that** the determination is carried out in such a manner that the instances in which the threshold value (M) is exceeded by the first and second signals in a first time window (ΔT) are compared.

4. Method according to Claim 1 or 2, **characterized in that** the determination is carried out in such a manner that the first and second signals are each compared with one another in the form of an integrated or numbered acceleration signal.

5. Method according to Claim 1 or 2, **characterized in that** the determination is carried out in such a manner that the absolute magnitudes of the first and second signals are compared.

6. Method according to Claim 1 or 2, **characterized in that** the determination is carried out in such a manner that the first and second signals are filtered and the filtered signals are compared with one another.

7. Method according to Claim 1, **characterized in that** the vehicle speed is additionally taken into account.

## Revendications

1. Procédé de détection d'une collision avec un piéton comprenant les étapes suivantes:
- Détection d'une collision avec un piéton au moyen d'au moins un premier signal d'un premier capteur d'accélération (BS1)
- Constatation de l'aptitude fonctionnelle du premier et/ou d'un deuxième capteur d'accélération (BS1-BS4) par comparaison du premier signal avec un deuxième signal du capteur d'accélération (BS2-BS4)
- Génération d'un signal de commande en fonction de la constatation en soumettant le premier et le deuxième signal parallèlement à deux critères: d'une part un critère de fréquence et d'autre part un critère de différence de crête, dans lequel
dans le cas du critère de fréquence, un nombre respectif de changements de signe d'une première différence entre les valeurs absolues des valeurs mesurées du premier et du deuxième signal, lesquelles se suivent directement et sont supérieures à un seuil de bruit, est à chaque fois utilisé au sein d'un premier intervalle de temps donné, un quotient du nombre de changements de signe qui se produisent au niveau des deux capteurs étant une grandeur qui est comparée avec un premier seuil empirique afin de représenter un critère de décision de diagnostic et dans lequel
dans le cas du critère de différence de crête, l'amplitude du premier et du deuxième signal qui est supérieure à un seuil de bruit est à chaque fois additionnée au sein d'un deuxième intervalle de temps pour former une première et une deuxième somme et une deuxième différence est déterminée à partir de la première et de la deuxième somme après le deuxième intervalle de temps et la deuxième différence est comparée avec un deuxième seuil déterminé de manière empirique en vue de détecter les erreurs.

2. Procédé selon la revendication 1, **caractérisé en ce que** la constatation est faite en fonction du dépassement d'une valeur de seuil (M) par le premier signal, la valeur de seuil (M) étant supérieure au seuil de bruit (R).

3. Procédé selon la revendication 2, **caractérisé en ce que** la constatation est faite en réalisant une comparaison des dépassements de la valeur de seuil (M) par le premier et le deuxième signal dans un premier créneau temporel (ΔT).

4. Procédé selon la revendication 1 ou 2, **caractérisé en ce que** la constatation est faite en comparant entre eux le premier signal et le deuxième signal respectivement en tant que signal d'accélération intégré ou numérisé.

5. Procédé selon la revendication 1 ou 2, **caractérisé en ce que** la constatation est faite en comparant les valeurs absolues du premier et du deuxième signal.

6. Procédé selon la revendication 1 ou 2, **caractérisé en ce que** la constatation est faite en comparant entre eux le premier et le deuxième signal filtrés et les signaux filtrés.

7. Procédé selon la revendication 1, **caractérisé en ce qu'**il est en plus tenu compte de la vitesse du véhicule.
